# EUROPÄISCHE PATENTANMELDUNG

(11) **EP 3 659 738 A1**
(43) Veröffentlichungstag der Anmeldung: **03.06.2020**
(21) Anmeldenummer: 20153575.4
(22) Anmeldetag: 28.10.2011
(51) Int. Cl.: B23K 26/34, C23C 8/06

(54) **VERFAHREN ZUR GEZIELTEN MATERIALVERÄNDERUNG WÄHREND DES SELEKTIVEN LASERSCHMELZVERFAHRENS**

(30) Priorität: 28.10.2010 DE 102010049910
(62) Teilanmeldung aus: 11796913.9
(71) Anmelder: Airbus Defence and Space GmbH, 85521 Ottobrunn (DE)
(72) Erfinder: PALM, Frank, 82008 Unterhaching (DE)
(74) Vertreter: Isarpatent

(57) **Zusammenfassung**

Die vorliegende Erfindung betrifft Bauteile, die aus einem Werkstoff, der mindestens ein Refraktärmetall enthält, bestehen und Hartphasen einschließen, sowie Verfahren zu deren Herstellung. Insbesondere bezieht sich die vorliegende Erfindung auf die Verwendung eines reaktiven Gases im selektiven Laserschmelzverfahren zur Erhöhung der thermischen Belastbarkeit eines hierbei aus einem mindestens ein Refraktärmetall enthaltenden Werkstoffpulver hergestellten Bauteils.

## Beschreibung

### GEBIET DER ERFINDUNG

Die vorliegende Erfindung betrifft Bauteile, die aus einem Werkstoff, der mindestens ein Refraktärmetall umfasst, bestehen und Hartphasen einschließen, sowie Verfahren zu deren Herstellung. Insbesondere betrifft die vorliegende Erfindung die Verwendung eines reaktiven Gases bei der Verarbeitung eines Werkstoffes, der mindestens ein Refraktärmetall umfasst, im selektiven Laserschmelzverfahren. Zusätzlich beziehen sich spezifische Aspekte der Erfindung auf ein Computer-Programm-Element zur Ausführung der Verfahren und zur Steuerung der Verwendung, sowie auf ein entsprechendes Computerlesbares Medium.

### HINTERGRUND DER ERFINDUNG

In Flugzeugen, Raumschiffen oder Satelliten, ist es häufig erforderlich an hochbelasteten Stellen eigens konstruierte Bauteile einzusetzen, die sich durch besonders vorteilhafte Eigenschaften auszeichnen. So beschreiben beispielsweise die WO 2009/040112 und die US 2009/0301096 eine Kombination eines hohen Drucks und einer hohen Temperatur schon am Brennkammereintritt als Erfordernis effizienterer Turbinentriebwerke. Die im Triebwerksbau verwendeten Bauteile besitzen jedoch nur eine begrenzte thermische Stabilität, so dass es beispielsweise erforderlich ist Brennkammern mit Kühlsystemen auszurüsten, wie z.B. in US 2010/0229389 und DE 101 56 124. Diese gegenläufigen Anforderungen einer hohen Treibstoffeffizienz bei niedriger thermischer Belastung erschweren oder verhindern die Verbesserung bestehender und die Entwicklung neuer Antriebssysteme. In Spezialfällen wie Satellitentriebwerken werden entsprechende Bauteile daher aus sehr teuren Werkstoffen wie PtRh und Ptlr-Werkstoffen gefertigt, um eine höhere thermische Belastbarkeit zu ermöglichen.

Neben dem Preis der Werkstoffe an sich, ist auch eine zerspanende Fertigung von Bauteilen aus den extrem harten und thermisch belastbaren Werkstoffen sehr aufwendig. Ferner bieten die konventionellen Verfahren nur bedingt die Möglichkeit zur Erzeugung von Freiformflächen, Hinterschneidungen oder Hohlräumen. In der Folge hiervon müssen die Bauteile, die beispielsweise mittels eines numerischen Verfahrens optimiert werden, so gestaltet werden, dass diese in den gewählten konventionellen Fertigungsverfahren hergestellt werden können. So bleibt es nicht aus, dass die durch die Simulation als ideal erkannten Geometrien des Bauteils aus fertigungstechnischen Gründen nicht realisiert werden können bzw. dass an vielen Stellen des Strukturbauteils mehr Material stehen bleibt, als dies zur Kraftübertragung notwendig wäre. Das hierdurch erzielte höhere Gewicht ist jedoch beispielsweise im Flugzeugbau unerwünscht, da dies während der Flugphase zu einem höheren Energieverbrauch führt. Neue Zugangsmöglichkeiten zu komplexen Bauteilen scheinen jedoch durch neuartige Fertigungsverfahren, wie das in WO 2010/023059 genutzte selektive Laserschmelzverfahren gegeben zu sein.
In der WO 2009/156316 wird ferner ein selektives Laserschmelzverfahren beschrieben, in dem durch zeitweises Einsetzen von Reaktivgas lokale Schichtbereiche mit einer vom Werkstoff abweichenden Zusammensetzung erzeugt werden.

### ZUSAMMENFASSUNG DER ERFINDUNG

Demnach liegt der Erfindung die Aufgabe zugrunde, neuartige Bauteile mit verbesserten Eigenschaften, insbesondere mit einer verbesserten thermischen Belastbarkeit, bereitzustellen, sowie Verfahren zu deren Herstellung anzugeben.

Die Aufgabe wird gelöst durch den Gegenstand der jeweiligen unabhängigen Ansprüche. Weitere Ausführungsformen sind in den jeweiligen abhängigen Ansprüchen beschrieben.

Durch die Verwendung von aufschmelzbarem Material ist es möglich, Bauteile in aufeinander aufbauenden und miteinander verbundenen Schichten zu erzeugen, wie dies weiter unten im Zusammenhang mit einem erfindungsgemäßen Herstellungsverfahren beschrieben wird. Hierzu eignet sich jedes aufschmelzbare Material wie beispielsweise Kunststoff oder Metall.

Gemäß einem Aspekt der vorliegenden Erfindung wird die thermische Belastbarkeit eines Bauteils dadurch erhöht, das es schichtweise durch das Aufschmelzen eines Werkstoffpulvers, das mindestens ein Refraktärmetall enthält, in einer Atmosphäre enthaltend mindestens ein reaktives Gas, aufgebaut wird. Hierbei wird die Zusammensetzung des Werkstoffes durch eine Reaktion mit einem in der Atmosphäre enthaltenen reaktiven Gas während des Aufbaus des Bauteils verändert.

Durch die Verwendung des vorgenannten Verfahrens ist es möglich Bauteile herzustellen, deren Grenztemperatur für die Kriechfestigkeit (bleibende Längenänderung ≤ 1% nach 100 Std.) bei einer vorgegebenen Belastung von 25 N/mm² um mindestens 100°C, vorzugsweise um mindestens 200°C, mehr bevorzugt um mindestens 250°, noch mehr bevorzugt um mindestens 275°C und am meisten bevorzugt um mindestens300°C erhöht ist, verglichen mit einem identischen Bauteil, dass nach dem analogen Verfahren aus dem gleichen Werkstoff in Abwesenheit eines reaktiven Gases hergestellt wurde. Die Bestimmung der Kriechfestigkeit bzw. der Zeitstandsdehngrenze erfolgt hierbei gemäß DIN 50118.

In bestimmten Ausführungsformen besonders bevorzugte Refraktärmetalle zur Verwendung im vorgenannten Verfahren werden ausgewählt aus der Gruppe bestehend aus Zirkonium, Hafnium, Vanadium, Niob, Tantal, Chrom, Molybdän, Rhenium und Wolfram, vorzugsweise aus der Gruppe bestehend aus Zirkonium, Hafnium, Niob und Tantal. Hierbei stellt Tantal, gegebenenfalls in Kombination mit Hafnium, ein besonders bevorzugtes Refraktärmetall dar.

In bestimmten Ausführungsformen resultiert das vorgenannte Verfahren in einer Reaktion unter Ausbildung von Verbindungen von Kohlenstoff, Stickstoff, Bor, Silizium oder einer Mischung hiervon mit dem Werkstoff unter zumindest teilweiser Bildung von Carbiden, Nitriden, Boriden, Siliziden oder Mischungen hiervon. In bestimmten bevorzugten Ausführungsformen erfolgt die Ausbildung von Verbindungen von Kohlenstoff, Stickstoff oder einer Mischung hiervon mit dem Werkstoff unter zumindest teilweiser Bildung von Carbiden, Nitriden oder Carbonitriden. Infolge von beispielsweise Verunreinigungen des reaktiven Gases oder des Werkstoffes können die erfindungsgemäßen Reaktionsprodukte auch geringe Mengen an z.B. Oxynitriden oder Oxycarbiden enthalten. In bestimmten Ausführungsformen ist die Menge des in Oxiden gebundenen Sauerstoffs in den Hartphasen geringer als 10 Gew.-%, aber größer als 0,05 Gew.-% (500 ppm). Die Menge des in den Hartphasen enthaltenen Sauerstoffs kann bestimmt werden mittels Funkenemissionsspektrometrie, Lichtbogenemissionsspektrometrie, Röntgenfluoreszenzanalyse, Elektronenstrahlmikroanalyse oder mittels Heissgas-Extraktionsanalyse.

Beispiele für Kohlenstoff-, Stickstoff-, Bor- oder Siliciumquellen zur Verwendung im vorgenannten Verfahren sind N₂, NH₃, NO₂, C₁-C₈ Alkane, CO, CO₂, BCl₃ oder SiH₄.

In bestimmten Ausführungsformen ist es bevorzugt, das Bauteil anschließend z.B. nach dem selektiven Laserschmelzverfahren, einer nachfolgenden Wärmebehandlung zu unterziehen. Diese kann direkt nach dem Aufbauen noch in der Aufbaukammer mittels eines zum Aufbau benutzten Lasers oder Elektronenstrahls erfolgen oder als gesonderter Prozess in einen Wärmebehandlungsofen, wobei die Ofenkammer mit einer inerten Gasatmosphäre gefüllt ist oder mit einem Vakuum betrieben wird. In bestimmten Ausführungsformen ist es bevorzugt den Prozess unter erhöhtem Druck (heiss isostatisch pressen) durchzuführen. Das Temperaturfenster für diese Wärmebehandlung liegt zwischen 1000 - 2500°C, vorzugsweise zwischen 1200 - 2200°C, noch bevorzugter zwischen 1400 - 2000°C.

Ein weiterer Aspekt der vorliegenden Erfindung ist auf die Verwendung mindestens eines reaktiven Gases bei der Herstellung des Bauteils aus einem Werkstoffpulver zur Erhöhung der Grenztemperatur der Kriechfestigkeit (bleibende Längenänderung ≤ 1% nach 100 Std.) bei einer vorgegebenen Belastung von 25 N/mm² um mindestens 100°C, vorzugsweise um mindestens 200°C, mehr bevorzugt um mindestens 250°C, noch mehr bevorzugt um mindestens 275°C und am meisten bevorzugt um mindestens 300°C, verglichen mit einem identischen Bauteil, dass nach dem analogen Verfahren aus dem gleichen Werkstoff in Abwesenheit eines reaktiven Gases hergestellt wurde.

Das reaktive Gas für die vorgenannte Verwendung ist bevorzugt eine feste, flüssige oder gasförmige Kohlenstoffquelle, Stickstoffquelle, Borquelle, Siliciumquelle oder Mischungen hiervon. In bestimmten bevorzugten Ausführungsformen ist das reaktive Gas eine feste, flüssige oder gasförmige Kohlenstoffquelle, Stickstoffquelle oder Mischungen hiervon.

Ein weiterer Aspekt der vorliegenden Erfindung bezieht sich auf ein Bauteil, das nach einem der vorgenannten Verfahren hergestellt oder unter einer der vorgenannten Verwendungen eines reaktiven Gases erhalten wurde.

Ein weiterer Aspekt der vorliegenden Erfindung ist gerichtet auf ein Bauteil, das aus einem Werkstoff, der mindestens ein Refraktärmetall umfasst, besteht und Hartphasen einschließt.

In bestimmten Ausführungsformen ist es bevorzugt das Refraktärmetall aus der Gruppe bestehend aus Zirkonium, Hafnium, Niob, Wolfram, Rhenium oder Tantal, insbesondere aus Hafnium und Tantal, auszuwählen.

In bestimmten Ausführungsformen ist es ferner bevorzugt, dass die Hartphasen des vorgenannten Bauteils Carbide, Nitride, Silizide, Boride oder Mischungen hiervon, insbesondere Carbide, Nitride oder Carbonitride, umfassen.

Zudem ist es in bestimmten Ausführungsformen bevorzugt, dass die Größe von 95 %, vorzugsweise 99 %, der inkohärenten Hartphasen zwischen 3 und 300 nm, bevorzugt zwischen 3 und 200 nm und noch mehr bevorzugt zwischen 5 und 50 nm liegt.

Weiterhin liegt der mittlere Abstand zwischen den inkohärenten Hartphasen in bestimmten Ausführungsformen zwischen dem 2- und 15-fachen des mittleren Hartphasendurchmessers, vorzugsweise zwischen dem 2,5- und 15-fachen des mittleren Hartphasendurchmessers und bevorzugter zwischen dem 3- und 10-fachen des mittleren Hartphasendurchmessers.

In weiteren bestimmten Ausführungsformen beträgt die mittlere Konzentration der Hartphasen mindestens 10⁶ Hartphasen pro cm³, vorzugsweise mindestens 10⁷ Hartphasen pro cm³, mehr bevorzugt mindestens 10⁸ Hartphasen pro cm³ und noch mehr bevorzugt mindestens 10⁹ Hartphasen pro cm³ beträgt.

Ferner beträgt in bestimmten Ausführungsformen die mittlere Konzentration der Hartphasen höchstens 10²⁰ Hartphasen pro cm³, vorzugsweise höchstens 10¹⁹ Hartphasen pro cm³, mehr bevorzugt höchstens 10¹⁸ Hartphasen pro cm³ und noch mehr bevorzugt höchstens 10¹⁷ Hartphasen pro cm³ beträgt.

Gemäß einem weiteren Aspekt der Erfindung ist ein Computer-Programm-Element dazu eingerichtet, wenn es auf einer computergesteuerten Vorrichtung zum Durchführen eines generatives Schichtbauverfahrens ausgeführt wird, das oben beschriebene Verfahren zur Herstellung eines Bauteils auszuführen oder die vorgenannte Verwendung eines reaktiven Gases zu steuern.

Gemäß einem weiteren Aspekt der Erfindung kann ein computerlesbares Medium mit einem darauf gespeicherten Computer-Programm-Element zur Durchführung eines generativen Schichtaufbaus zur Herstellung des vorgenannten Bauteils verwendet werden.

### DETAILLIERTE BESCHREIBUNG DER ERFINDUNG

Die Herstellung des Bauteils kann z.B. durch ein selektives Laserschmelzverfahren (SLS-Verfahren) erfolgen. Der Begriff "selektives Laserschmelzverfahren" im Sinne der vorliegenden Erfindung bezieht sich auf additive Fertigungsverfahren, auch Schichtbauverfahren genannt, die auf einer Laser- und/oder Elektronenstrahl gestützten Bearbeitung eines Pulvers beruhen. In bestimmten Ausführungsformen wird hierbei die Verwendung eines Elektronenstrahls bevorzugt. In anderen Ausführungsformen kann es hingegen bevorzugt sein einen Laserstrahl zu nutzen. Besondere Ausführungsformen beziehen sich ferner auf die Verwendung einer Kombination eines Laser- und Elektronenstrahl im vorgenannten Verfahren. Alle derartigen Verfahren sind in der Fachwelt auch unter Begriffen wie "direct metal deposition" oder "direct laser sintern" bekannt. Hierbei wird durch sogenanntes "Slicen" aufgrund von vorliegenden CAD-Daten das Bauteil mittels zahlreicher Schichten erzeugt. Damit wird das gesamte Bauteil einstückig hergestellt.

Ein Pulver oder Granulat wird auf eine Bauplattform mit geeigneten Verfahren bzw. Vorrichtungen, z.B. mit Hilfe eines Rakels vollflächig in einer Dicke von etwa 0,001 bis etwa 0,2 mm, bevorzugt von 0,01 bis 0,1 mm, besonders bevorzugt von 0,03 bis 0,07 mm, aufgebracht. Die Schichten werden durch eine Ansteuerung des Laserstrahls entsprechend der geslicten Kontur des Bauteils schrittweise in das Pulverbett geschmolzen. Eine Bauplattform wird nun geringfügig abgesenkt und eine neue Schicht aufgezogen. Das Pulver wird durch Anheben einer Pulverplattform oder als Vorrat in dem Rakel zur Verfügung gestellt. Der Schichtaufbau erfolgt in vertikaler Richtung. Die Energie, die vom Laser zugeführt wird, wird vom Pulver absorbiert und führt zu einem lokal begrenzten definierten Schmelzbad und in Folge dessen zum Verschmelzen der bestrahlten Pulverpartikel.

Da das SLS-Verfahren bedingt, dass die einzelnen Schichten durch die Ansteuerung eines Laserstrahls in ein Pulverbett eingeschmolzen werden, verbleibt das Pulver in Hohlräumen und wird nach der Fertigstellung durch entsprechende Öffnungen entfernt. In bestimmten Ausführungsformen wird eine nachfolgende Wärmebehandlung durchgeführt, um die gewünschten Eigenschaften des Bauteils zu erhalten.

Überraschenderweise wurde gefunden, dass die thermo-mechanische Belastbarkeit eines Bauteils, das aus einem Werkstoff enthaltend ein Refraktärmetall mittels dem SLS-Verfahren gefertigt wird, durch den Einsatz eines reaktiven Gases während des Aufbaus im SLS-Verfahren erhöht werden kann. Der Begriff "während des Aufbaus" im Sinne der vorliegenden Erfindung schließt die Phasen des Aufschmelzens, des Vorliegens als geschmolzener Werkstoff und des Erstarrens ein. Ohne dass es als Einschränkung verstanden werden soll, ist es die Ansicht des Erfinders, dass sich während des Aufbaus eines Bauteils beispielsweise aus einer Tantal-Wolframlegierung infolge der hohen negativen Bildungsenthalpien durch eine Reaktion mit einem reaktiven Gas auf der Schmelzbadoberfläche sehr stabile und fein verteilte Hartphasen bilden, beispielsweise bestehend aus Refraktärmetallcarbiden, -nitriden und Mischungen hiervon. Infolge der Schmelzdynamik erfolgt eine partielle Einmischung in das restliche Schmelzvolumen. Die hieraus resultierende Veränderung der Zusammensetzung führt wiederum zu den verbesserten Eigenschaften des verwendeten Werkstoffes wie beispielsweise einer erhöhten thermo-mechanischen Belastbarkeit.

Die erfindungsgemäßen Bauteile sind beispielsweise aufgrund ihrer erhöhten thermischen Belastbarkeit besonders geeignet als Bestandteile eines Triebwerkes, die hohen thermischen Belastungen ausgesetzt werden. Beispiele derartiger Bauteile sind Brennkammern und deren konvergent-divergenter Brennkammeraustritt hin zur Expansionsdüse von strahlungsgekühlten Satelliten-Lageregelungstriebwerken Weitere Beispiele sind Brennkammern in hoch belasteten Raketen in militärischen Anwendungen aus der Wehrtechnik. Ferner können thermisch und mechanisch hoch belastete Bauteile für Hyperschallanwendungen mittels des hierin offenbarten Verfahrens gefertigt werden.

Als Werkstoff zur Verwendung im vorliegenden Verfahren können verschiedenste, dem Fachmann bekannte Werkstoffe verwendet werden, wobei die Werkstoffe dadurch gekennzeichnet sind, dass sie ein Refraktärmetall umfassen und unter den Bedingungen des SLS-Verfahrens verarbeitet werden können. Der Begriff "Refraktärmetall" im Sinne der vorliegenden Erfindung bezieht sich auf Titan, Zirkonium, Hafnium, Vanadium, Niob, Tantal, Chrom, Molybdän, Wolfram und Rhenium, insbesondere auf die Elemente der 4. (Titan, Zirkonium, Hafnium), 5. (Vanadium, Niob, Tantal) und 6. (Chrom, Molybdän, Wolfram) Nebengruppe. In bestimmten Ausführungsformen der vorliegenden Erfindung ist es bevorzugt das Refraktärmetall aus der Gruppe der Refraktärmetalle auszuwählen, die eine große Differenz zwischen den thermodynamischen Stabilitäten des Metalls und seines Nitrids aufweisen, wie beispielsweise Titan, Zirkonium, Hafnium, Vanadium, Niob, Tantal, Chrom und Molybdän und insbesondere Tantal und Hafnium.

In bestimmten Ausführungsformen ist es bevorzugt, dass das eingesetzte Werkstoffpulver ferner ein Metall enthält, das die Schmelztemperatur des erhaltenen Werkstoffes mittels Mischkristallhärtung erhöht. Ein Beispiel für ein derartiges Metall ist Wolfram.

In weiteren bestimmten Ausführungsformen enthält das Werkstoffpulver ferner einen Hochtemperatur-Mischkristallverfestiger zur Verbesserung der Warmfestigkeit und Zähigkeit, insbesondere Rhenium.

In bestimmten Ausführungsformen ist es ferner bevorzugt, dass das im SLS-Verfahren eingesetzte Werkstoffpulver weitgehend frei von feinverteilten Hartphasen, insbesondere Hartphasen umfassend Carbide, Nitride, Silizide, Boride und Mischungen hiervon, ist. Dies ist deshalb vorteilhaft, weil so Agglomerierungen und die Bildung vergröberter Hartphasen vermieden werden können. Ferner kann damit auch eine Verringerung der thermischen Stabilität vermieden werden.

Der Begriff "Hartphase" im Sinne der vorliegenden Erfindung bezieht sich auf Verbindungen von Refraktärmetallen mit C, N, O, Si, B und Mischungen hiervon, wobei die "Härte" als Synonym für die thermische Stabilität (Schmelztemperatur) steht. Derart hoch schmelzende Hartphasen verändern ihre Größe und Verteilung in einer Refraktärwerkstoff-Metallmatrix nicht und behalten somit ihre festigkeitssteigernde Wirkung, wenn die thermo-mechanischen Belastungen in einer Raketenbrennkammer auf ein Temperaturfeld von beispielsweise unter 2000°C begrenzt werden können. Diese werden in eine Metall-Matrix bestehend aus dem Werkstoff, der ein Refraktärmetall umfasst, eingeschlossen bzw. fein verteilt. In bevorzugten Ausführungsformen umfassen die Hartphasen Carbide, Nitride, Silizide, Boride und Mischungen hiervon des Werkstoffes oder von Bestandteilen des Werkstoffes, insbesondere der Refraktärmetalle, vorzugsweise von Zirkonium, Tantal, Niob, Hafnium oder Mischungen hiervon und insbesondere von Tantal und/oder Hafnium.

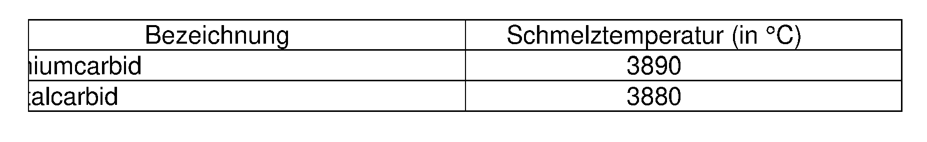

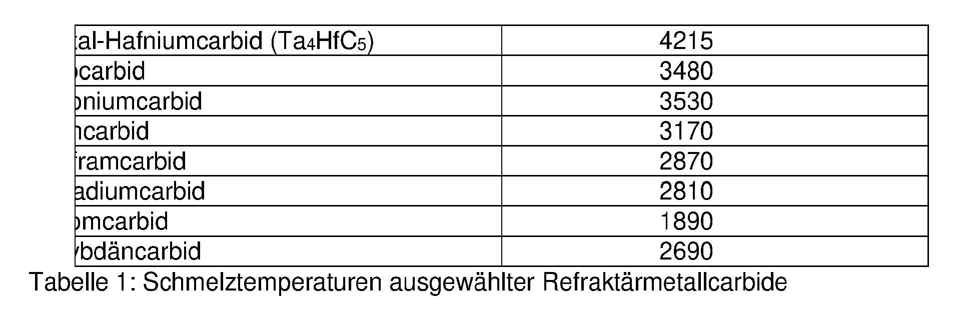

In bestimmte Ausführungsformen wird mindestens eins der Refraktärmetalle aus der Gruppe der Refraktärmetalle, deren Carbide eine Schmelztemperatur über 2400°C, vorzugsweise über 2700°C, bevorzugter über 3000°C, am meisten bevorzugt über 3300°C aufweisen, ausgewählt und insbesondere bevorzugt aus der Gruppe bestehend aus Tantal und Hafnium.

In weiteren Ausführungsformen wird mindestens eins der Refraktärmetalle wie vorstehend definiert mit einem leichteren Refraktärmetall kombiniert, wie z.B. Titan, Vanadium und Zirkonium, insbesondere Titan, um eine Gewichtseinsparung zu erreichen.

Weiterhin ist es in bestimmten Ausführungsformen bevorzugt, dass das eingesetzte Werkstoffpulver ferner ein Metall enthält, das die Duktilität erhöht, insbesondere Rhenium.

Dem Fachmann sind eine Vielzahl von Legierungen bekannt, die als Werkstoff im erfindungsgemäßen Verfahren eingesetzt oder erfindungsgemäß zusammen mit einem reaktiven Gas in einem SLS-Verfahren eingesetzt werden können. Beispiele für derartige Legierungen sind Ta-10W; Ta-2.5W; Ta-40Nb; Ta-8W-2Hf (T111), Ta-10W-2.5Hf-0.01C (T222), Ta-8W-1 Re-0.7Hf-0.025C-(0.002 N+O) (ASTAR811), Ta-15W-1Re-0.7Hf-0.025C-(0.002 N+O) (ASTAR1511), Ta-8W-1Re-1Hf-0.25C (ASTAR 811-C), Ta-15W-1Re-1Hf-0.25C (ASTAR 1511 C), Ta-(2-15W)-(0.5-5Re)-(0.5-2Hf), Nb-10Hf-1Ti (C-103), Nb-10Hf-0.07Y (C-129Y), Nb-30Hf-1.5Zr-15W (WC-3015), Nb-30Hf-1.5Zr-9W (WC-3009), insbesondere Ta-(2-15W)-(0.5-5Re)-(0.5-2Hf). Hierbei bezeichnet beispielsweise Ta-(2-15W)-(0.5-5Re)-(0.5-2Hf) eine Legierung aus Tantal, 2 bis 15 Gew.-% Wolfram, 0,5 bis 5 Gew.-% Rhenium und 0,5 bis 2 Gew.-% Hafnium. In bestimmten Ausführungsformen ist Ta-10W aufgrund seiner besonders hohen Kriechfestigkeit eine besonders bevorzugte Legierung.

Die im erfindungsgemäßen Verfahren verwendete Atmosphäre ist gekennzeichnet durch mindestens ein reaktives Gas. Der Begriff "Atmosphäre" im Sinne der vorliegenden Erfindung bezeichnet das Gas oder Gasgemisch, das das Werkstoffpulver während des Aufbaus des Bauteils mittels des SLS-Verfahrens umgibt. Der Begriff "reaktives Gas" im Sinn der vorliegenden Erfindung beschreibt einen unter den gewählten Verfahrensbedingungen gasförmigen Stoff, der mit dem Werkstoff reagieren kann, insbesondere unter Ausbildung von Verbindungen von Kohlenstoff, Stickstoff, Bor, Silicium oder einer Mischung hiervon mit dem Werkstoff. Der Begriff "Verbindung" im Sinne der vorliegenden Erfindung ist breit auszulegen und umfasst insbesondere ionische, kovalente und Einlagerungsverbindungen. In bestimmten Ausführungsformen resultiert die Reaktion des reaktiven Gases mit dem Werkstoff unter Ausbildung von Verbindungen von Kohlenstoff und/oder Stickstoff mit dem Werkstoff unter Bildung von Hartphasen, d.h. z.B. Metallcarbiden, Metallnitriden und Mischformen hiervon. Beispiele für reaktive Gase sind N₂, NH₃, NO₂, C₁-C₈ Alkane, CO, CO₂, BCl₃ oder SiH₄. Der Begriff "C₁-C₈ Alkane" bezieht sich auf Alkane, die 1 bis 8 Kohlenstoffatomen umfassen. In bestimmten Ausführungsformen kann die Verwendung der C₁-C₆, C₁-C₄ oder der C₁-C₃ Alkane bevorzugt werden, beispielsweise Methan und Propan, insbesondere Methan.

Zudem kann es bevorzugt sein nur eine geringe Konzentration des reaktiven Gases in der Atmosphäre einzusetzen, da zu große Mengen des reaktiven Gases in bestimmten Ausführungsformen zu einer Versprödung des Materials führen können. Um die beispielsweise für Brennkammern erforderliche Duktilität zu erreichen, kann das SLS-Verfahren daher auch unter einem erniedrigten Druck durchgeführt werden. Dies ist insbesondere vorteilhaft bei der Verwendung eines Elektronenstrahls im SLS-Verfahren, der vorzugsweise im Vakuum verwendet wird. In diesem Fall ist es daher besonders bevorzugt das Verfahren bei einem geringen Druck, d.h. nur eines geringe Menge des reaktiven Gases in einem Vakuum, durchzuführen, um den Elektronenstrahl nicht zu stark abzuschwächen.

Zusätzlich oder alternativ kann die Atmosphäre inerte Gase wie beispielsweise Argon oder Helium, bevorzugt Argon, enthalten, um die Konzentration des reaktiven Gases zu erniedrigen. In bestimmten Ausführungsformen beträgt der Druck bzw. Partialdruck der reaktiven Gase jeweils bis zu 100 mbar, bis zu 80 mbar, bis zu 60 mbar, bis zu 40 mbar, bis zu 20 mbar, bis zu 15 mbar, bis zu 10 mbar, bis zu 9 mbar, bis zu 8 mbar, bis zu 7 mbar, bis zu 6 mbar oder bis zu 5 mbar. In weiteren Ausführungsformen beträgt der Druck bzw. Partialdruck der reaktiven Gase jeweils mindestens 0,1 mbar, mindestens 0,2 mbar, mindestens 0,3 mbar, mindestens 0,4 mbar, mindestens 0,5 mbar, mindestens 0,6 mbar, mindestens 0,8 mbar, mindestens 1 mbar, mindestens 2 mbar, mindestens 3 mbar oder mindestens 4 mbar. In spezifischen bevorzugten Ausführungsformen liegt der Druck bzw. Partialdruck der reaktiven Gase jeweils zwischen 0,1 mbar und 100 mbar, zwischen 0,1 mbar und 50 mbar, zwischen 0,1 mbar 20 mbar, zwischen 0,1 mbar 10 mbar, zwischen 0,5 mbar und 100 mbar, zwischen 0,5 mbar und 50 mbar, zwischen 0,5 mbar 20 mbar, zwischen 0,5 mbar 10 mbar, zwischen 1 mbar und 100 bar, zwischen 1 mbar und 50 mbar, zwischen 1 mbar und 20 mbar, zwischen 1 mbar 10 mbar, zwischen 2 mbar und 100 mbar, zwischen 2 mbar und 50 mbar, oder zwischen 2 mbar und 20 mbar, zwischen 2 mbar 10 mbar. In bestimmten Ausführungsformen beziehen sich die vorgenannten Grenzwerte bzw. Bereiche auf die Summe der Partialdrücke aller reaktiven Gase.

Die Bestimmung des Drucks kann hierbei mittels eines handelsüblichen Manometer bestimmt werden. Die Bestimmung des Partialdruckes erfolgt beispielsweise mittels Partialdruckmessgeräten auf massenspektrometischer Basis, auf potentiometrischer Basis oder auf photometrischer Basis (optische Methoden). Partialdruckmessgeräte auf photometrischer Basis nutzen z.B. Absorptions-, Transmissions- oder Fluoreszenzeffekte. Beispiele derartiger optischer Gassensoren, z.B. der Firma Yokogawa, basieren auf der Intensitätsänderung eines Lasers bei einer bestimmten, für das jeweilige Gas charakteristischen Wellenlänge.

In bestimmten Ausführungsformen wird es bevorzugt einen großen Überschuss des reaktiven Gases bezogen auf die Menge des zu schmelzenden Werkstoffes in der Atmosphäre bereitzustellen, um eine ausreichende Versorgung über die Dauer des SLS-Verfahrens zu gewährleisten. In anderen Ausführungsformen erfolgt ein kontinuierlicher Austausch der Atmosphäre, um eine weitgehend gleichbleibende Konzentration des reaktiven Gases zu erreichen. In weiteren Ausführungsformen wird die Atmosphäre während des SLS-Verfahrens um das im SLS-Verfahren verbrauchte reaktive Gas angereichert, um eine möglichst gleichbleibende Konzentration des reaktiven Gases zu erreichen.

In bestimmten Ausführungsformen kann es bevorzugt sein den Einsatz bzw. die Bildung von Wasserstoff möglichst zu vermeiden, um eine Versprödung bestimmter Werkstoffes zu verhindern. In wieder anderen Ausführungsformen kann es hingegen bevorzugt sein Wasserstoff einzusetzen, um beispielsweise ein reaktives Gas wie CO₂ zu reduzieren.

In bestimmten Ausführungsformen ist es bevorzugt, dass das Bauteil eine möglichst isotrope Verteilung der Carbide, Nitride, Boride, Silizide und der Mischungen hiervon enthält. Der Begriff "isotrop" im Sinne der vorliegenden Erfindung beschreibt eine gleichmäßige Verteilung im Bauteil. Es muss verstanden werden, dass der Begriff "isotrop" im Sinne der vorliegenden Erfindung geringfügige, lokale Anisotropien beispielsweise infolge von statistischen Effekten nicht ausschließt. In wieder anderen Ausführungsformen wird gezielt eine anisotrope Carbidverteilung, Nitridverteilung, Boridverteilung, Silizidverteilung oder Mischungen hiervon im Bauteil verursacht, beispielsweise durch eine Veränderung der Konzentration des reaktiven Gases während des SLS-Verfahrens. Die Begriffe "Anisotropie" und "anisotrop" im Sinne der vorliegenden Erfindung beschreiben eine ungleichmäßige Verteilung entlang mindestens einer Raumrichtung, wodurch ein Gradient der Carbidverteilung, Nitridverteilung, Boridverteilung, Silizidverteilung oder Mischungen hiervon entsteht. In besonderen Ausführungsformen ist es insbesondere bevorzugt die Borid- und oder Silizidverteilung in den Randbereichen des Bauteils zu erhöhen.

Ferner sind bestimmte Ausführungsformen auf Bauteile gerichtet, deren Hartphasen eine isotrope Verteilung aufweisen, sowie Verfahren zu deren Herstellung. In bestimmten Ausführungsformen besitzen die erfindungsgemäß hergestellten Bauteile eine isotrope Verteilung der Hartphasen, weisen jedoch eine Anisotropie betreffend der Größe der Hartphasen auf. In anderen Ausführungsformen sind die erfindungsgemäß hergestellten Bauteile gekennzeichnet durch eine anisotrope Verteilung der Hartphasen. Besondere Ausführungsformen sind hierbei auf Bauteile gerichtet, die eine anisotrope Verteilung der Hartphasen und eine anisotrope Größenverteilung aufweisen, sowie Verfahren zu deren Herstellung.

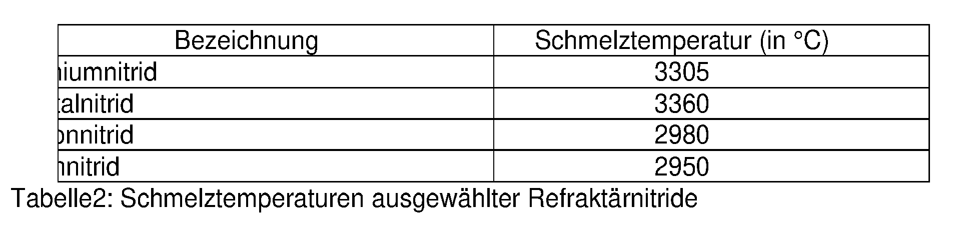

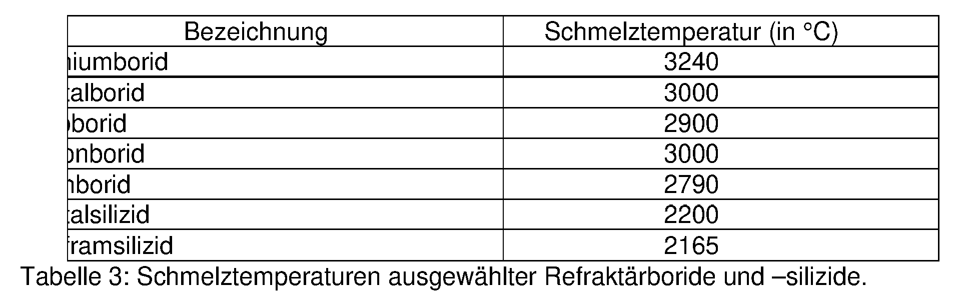

Von besonderem Interesse im Sinne der vorliegenden Erfindung ist die Bildung und/oder Einlagerung von Hartphasen des Kohlenstoffs und/oder Stickstoffs, aufgrund der besonders hohen Schmelztemperaturen der Nitride, Carbide und Carbonitride. Jedoch kann es in bestimmten Ausführungsformen bevorzugt werden die Bildung und/oder Einlagerung von Hartphasen des Kohlenstoffs und/oder Stickstoffs beispielsweise mit einer Bildung und/oder Einlagerung von Hartphasen des Siliciums zu kombinieren, um die Fähigkeit zur Ausbildung glasartiger Schutzschichten (SiO₂) auf dem Silizid-Substrat zu verleihen und einen erhöhten Oxidationsschutz beispielsweise gegenüber Verbrennungsgasen bereitzustellen. In wieder anderen Ausführungsformen kann es bevorzugt sein die Ausbildung einer potentiellen Schutzschicht bestehend aus Boraten zu ermöglichen und daher die Bildung und/oder Einlagerung von Hartphasen des Stickstoffs und/oder Kohlenstoffs mit denen des Bors zu kombinieren.

Ferner wurde beobachtet, dass eine Erhöhung der Warmfestigkeit im Bereich > 1000°C von der Größe und der Verteilung der Hartphasen abhängig ist. In bestimmten Ausführungsformen sind daher 95 %, vorzugsweise 99 %, mehr bevorzugt 100 %, der inkohärenten Hartphasen, die in einer statistisch repräsentativen Messung bestimmt wurden, kleiner als 300 nm, vorzugsweise kleiner als 250 nm, mehr bevorzugt kleiner als 200 nm, noch mehr bevorzugt kleiner als 150 nm, noch mehr bevorzugt kleiner als 100 nm und am meisten bevorzugt kleiner als 50 nm. Der Begriff "inkohärent" im Sinne der vorliegenden Erfindung ist breit auszulegen und umfasst insbesondere dreidimensionale Gitterdefekte, deren Netzebenen keine Korrelation zur Matrix aufweisen. In bestimmten Ausführungsformen ist der Begriff "inkohärent" auf Gitterdefekte gerichtet, die eine von der Matrix abweichende Metallgitterstruktur aufweisen. Eine Bestimmung derartiger inkohärenter Phasen erfolgt beispielsweise mittels der Transmissionselektronenspektroskopie, Rasterelektronenmikroskopie oder Röntgendiffraktometrie. Der Begriff "statistisch repräsentativ" im Sinne der vorliegenden Erfindung beschreibt eine Untersuchung, die an einer ausreichenden Menge an Hartphasen durchgeführt wurde, um Rückschlüsse auf die Gesamtmenge der Hartphasen zu erhalten, beispielsweise 10⁴ Hartphasen, vorzugsweise 10⁵ Hartphasen, mehr bevorzugt 10⁶ Hartphasen, noch mehr bevorzugt 5·10⁶ Hartphasen und noch mehr bevorzugt 10⁷ Hartphasen, Ferner ist es in bestimmten Ausführungsformen bevorzugt, dass 95 %, vorzugsweise 99 %, mehr bevorzugt 100 %, der inkohärenten Hartphasen, die in einer statistisch repräsentativen Messung bestimmt wurden, größer als 1 nm, vorzugsweise größer als 3 nm, mehr bevorzugt größer als 5 nm, noch mehr bevorzugt größer als 10 nm sind. In bestimmten Ausführungsformen der vorliegenden Erfindung liegt die Größe von 95 %, vorzugsweise 99 %, mehr bevorzugt 100 %, der inkohärenten Hartphasen, die in einer statistisch repräsentativen Messung bestimmt wurden, zwischen 3 und 300 nm, zwischen 3 und 250 nm, zwischen 3 und 200 nm, zwischen 3 und 150 nm, zwischen 3 und 100 nm, zwischen 3 und 50 nm, zwischen 3 und 40 nm, zwischen 5 und 300 nm, zwischen 5 und 250 nm, zwischen 5 und 200 nm, zwischen 5 und 150 nm, zwischen 5 und 100 nm, zwischen 5 und 50 nm, zwischen 5 und 40 nm, zwischen 10 und 300 nm, zwischen 10 und 250 nm, zwischen 10 und 200 nm, zwischen 10 und 150 nm, zwischen 10 und 100 nm, zwischen 10 und 50 nm oder zwischen 10 und 40 nm. Die vorgenannten Größen der Hartphasen können bestimmt werden mittels Durchstrahlungs-Elektronen-Mikroskopie oder auch Local electrode atom probe Tomographie (LEAP tomography).

Ferner ist es in bestimmten Ausführungsformen bevorzugt, dass der mittlere Abstand zwischen den inkohärenten Hartphasen mindestens den mittleren Hartphasendurchmesser, vorzugsweise mindestens den 2-fachen mittleren Hartphasendurchmesser, mehr bevorzugt mindestens den 2,5-fachen mittleren Hartphasendurchmesser, noch mehr bevorzugt mindestens den 3-fachen mittleren Hartphasendurchmesser, noch mehr bevorzugt mindestens den 3,5-fachen mittleren Hartphasendurchmesser und am meisten bevorzugt mindestens den 4-fachen mittleren Hartphasendurchmesser beträgt. Sofern nichts Gegenteiliges bestimmt ist, bezieht sich der Begriff "mittlerer" im Sinne der vorliegenden Erfindung auf das arithmetische Mittel beispielsweise des Abstandes oder des Hartphasendurchmessers, das z.B. in einer statistisch repräsentativen Messung bestimmt wurde. Zudem ist es in bestimmten Ausführungsformen bevorzugt, dass der mittlere Abstand zwischen den inkohärenten Hartphasen höchstens den 20-fachen Hartphasendurchmesser, vorzugsweise höchstens den 15-fachen mittleren Hartphasendurchmesser, mehr bevorzugt höchstens den 12-fachen mittleren Hartphasendurchmesser, noch mehr bevorzugt höchstens den 10-fachen mittleren Hartphasendurchmesser, noch mehr bevorzugt höchstens den 9-fachen mittleren Hartphasendurchmesser und am meisten bevorzugt höchstens den 8-fachen mittleren Hartphasendurchmesser beträgt. In bestimmten bevorzugten Ausführungsformen beträgt der mittlere Abstand zwischen den inkohärenten Hartphasen zwischen dem 2- bis 15-fachen des mittleren Hartphasendurchmessers, vorzugsweise zwischen dem 2,5- bis 12-fachen des mittleren Hartphasendurchmessers und bevorzugter zwischen dem 3- bis 10-fachen des mittleren Hartphasendurchmessers. Der vorgenannte mittlere Abstand der Hartphasen kann bestimmt werden mittels Durchstrahlungs-Elektronen-Mikroskopie oder auch LEAP tomography.

Zudem ist es in bestimmten Ausführungsformen bevorzugt, dass die mittlere Konzentration der Hartphasen im Werkstoff mindestens 10⁴ Hartphasen pro cm³, mindestens 10⁵ Hartphasen pro cm³, mindestens 10⁶ Hartphasen pro cm³, mindestens 10⁷ Hartphasen pro cm³, mindestens 5·10⁷ Hartphasen pro cm³, mindestens 10⁸ Hartphasen pro cm³, mindestens 5·10⁸ Hartphasen pro cm³, mindestens 10⁹ Hartphasen pro cm³, mindestens 5·10⁹ Hartphasen pro cm³, mindestens 10¹⁰ Hartphasen pro cm³, mindestens 2·10¹⁰ Hartphasen pro cm³, mindestens 3·10¹⁰ Hartphasen pro cm³, mindestens 4·10¹⁰ Hartphasen pro cm³ oder mindestens 5·10¹⁰ Hartphasen pro cm³ beträgt. In weiteren Ausführungsformen beträgt die mittlere Konzentration der Hartphasen im Werkstoff vorzugsweise höchstens 10²⁰ Hartphasen pro cm³, höchstens 5·10¹⁹ Hartphasen pro cm³, höchstens 10¹⁹ Hartphasen pro cm³, höchstens 5·10¹⁸ Hartphasen pro cm³, höchstens 10¹⁸ Hartphasen pro cm³, höchstens 5·10¹⁷ Hartphasen pro cm³, höchstens 10¹⁷ Hartphasen pro cm³, höchstens 5·10¹⁶ Hartphasen pro cm³, höchstens 10¹⁶ Hartphasen pro cm³, höchstens 5·10¹⁵ Hartphasen pro cm³ oder höchstens 10¹⁵ Hartphasen pro cm³. Die vorgenannte Konzentration der Hartphasen kann bestimmt werden mittels Durchstrahlungs-Elektronen-Mikroskopie oder auch LEAP tomography.

In bestimmten Ausführungsformen sind die Hartphasen in einer Menge von weniger als 90 Vol.-%, weniger als 85 Vol.-%, weniger als 80 Vol.-%, weniger als 75 Vol.-%, weniger als 70 Vol.-%, weniger als 65 Vol.-%, weniger als 60 Vol.-%, weniger als 55 Vol.-%, weniger als 50 Vol.-%, weniger als 45 Vol.-%, weniger als 40 Vol.-%, weniger als 35 Vol.-% oder weniger als 30 Vol.-% enthalten, um eine höhere Duktilität bereitzustellen.

In weiteren Ausführungsformen sind die Hartphasen in einer Menge von mehr als 1 Vol.-%, mehr als 2 Vol.-%, mehr als 3 Vol.-%, mehr als 4 Vol.-%, mehr als 5 Vol. %, mehr als 6 Vol.-%, mehr als 8 Vol.-%, mehr als 10 Vol.-%, mehr als 15 Vol.-%, mehr als 20 Vol.-%, mehr als 25 Vol.-%, mehr als 30 Vol.-% oder mehr als 35 Vol. % enthalten, um eine höhere thermische Belastbarkeit bereitzustellen. In bestimmten bevorzugten Ausführungsformen sind die Hartphasen in einem Menge von 1 bis 90 Vol.-%, 1 bis 80 Vol.-%, 1 bis 70 Vol.-%, 1 bis 60 Vol.-%, 1 bis 50 Vol.-%, 1 bis 40 Vol.-%, 3 bis 90 Vol.-%, 3 bis 80 Vol.-%, 3 bis 70 Vol.-%, 3 bis 60 Vol.-%, 3 bis 50 Vol.-%, 3 bis 40 Vol.-%, 5 bis 90 Vol.-%, 5 bis 80 Vol.-%, 5 bis 70 Vol.-%, 5 bis 60 Vol.-%, 5 bis 50 Vol.-%, 5 bis 40 Vol.-%, 10 bis 90 Vol.-%, 10 bis 80 Vol.-%, 10 bis 70 Vol.-%, 10 bis 60 Vol.-%, 10 bis 50 Vol.-%, 10 bis 40 Vol.-%, 20 bis 90 Vol.-%, 20 bis 80 Vol.-%, 20 bis 70 Vol.-%, 20 bis 60 Vol.-%, 20 bis 50 Vol.-%, 20 bis 40 Vol.-%, 30 bis 90 Vol.-%, 30 bis 80 Vol.-%, 30 bis 70 Vol.-%, 30 bis 60 Vol.-%, 30 bis 50 Vol.-%, 30 bis 40 Vol.-% enthalten. Die Bestimmung der vorgenannten Menge erfolgt beispielsweise mittels LEAP tomography.

Das nach dem erfindungsgemäßen Verfahren hergestellte Bauteil weist eine verbesserte thermische Belastbarkeit gegenüber einem Bauteil auf, das in einer Atmosphäre ohne reaktives Gas hergestellt wurde. In bestimmten Ausführungsformen ist das gemäß dem erfindungsgemäßen Verfahren herstellte Bauteil gekennzeichnet durch eine Erhöhung der Grenztemperatur der Kriechfestigkeit (bleibende Längenänderung ≤ 1% nach 100 Std.) bei einer vorgegebenen Belastung von 25 N/mm² um mindestens 50°C, um mindestens 75°C, um mindestens 100°C, um mindestens 125°C, um mindestens 150°C, um mindestens 175°C, um mindestens 200°C, um mindestens 225°C, um mindestens 250°C, um mindestens 275°C, um mindestens 300°C, um mindestens 325°C, um mindestens 350°C, um mindestens 375°C oder um mindestens 400°C. Die Bestimmung der Grenztemperatur für die Kriechfestigkeit (bleibende Längenänderung ≤ 1% nach 100 Std.) bei einer vorgegebenen Belastung von 25 N/mm² erfolgt hierbei nach DIN50118.

Gemäß dem vorgenannten Verfahren kann beispielsweise in einer Pulverbett Lasersinteranlage der Fa. EOS (EOSint M270) ein Tantal-Wolfram-Pulver mit 10 Gew.-% Wolfram umgeschmolzen werden, wobei eine Argon-Schutzgasatmosphäre beinhaltend 10 Vol.-% Stickstoff verwendet wird. Nach Einstellung eine definierten Laserleistung und der Festlegung des Laserfokusdurchmessers wandert der Laserstrahl, geführt durch einen Scannerspiegel über die zuvor definiert aufgetragene Pulverfläche (Auftragsdicke 50 □m), wobei das Pulver lokal schmilzt. Nach Abschluss dieses Prozessschritts wird die nächste Ebene Pulver aufgetragen und alle zuvor genannten Verfahrensschritte starten von neuem.

Ergänzend ist darauf hinzuweisen, dass "umfassend" keine anderen Elemente oder Schritte ausschließt und "eine" oder "ein" eine Vielzahl nicht ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können.

Darüber sind folgende Ausführungsformen beschrieben:
1 Verfahren zur Erhöhung der thermischen Belastbarkeit eines Bauteils, wobei das Bauteil schichtweise durch das Aufschmelzen eines Werkstoffpulvers in einer Atmosphäre enthaltend mindestens ein reaktives Gas aufgebaut wird, der Werkstoff mindestens ein Refraktärmetall umfasst und sich die Zusammensetzung des Werkstoffes während des Aufbaus des Bauteils infolge einer Reaktion mit mindestens einem in der Atmosphäre enthaltenen reaktiven Gas verändert.
2 Verfahren gemäß 1, wobei die Grenztemperatur der Kriechfestigkeit (bleibende Längenänderung ≤ 1% nach 100 Std.) bei einer vorgegebenen Belastung von 25 N/mm² des Bauteils durch die Reaktion um mindestens 100°C, vorzugsweise um mindestens 200°C, mehr bevorzugt um mindestens 250°C, noch mehr bevorzugt um mindestens 275°C und am meisten bevorzugt um mindestens 300°C erhöht wird.
3 Verfahren gemäß 1 oder 2, wobei das Refraktärmetall aus der Gruppe bestehend aus Titan, Zirkonium, Hafnium, Vanadium, Niob, Tantal, Chrom, Molybdän und Wolfram, vorzugsweise aus der Gruppe bestehend aus Zirkonium, Hafnium, Niob und Tantal, ausgewählt wird und insbesondere Tantal ist.
4 Verfahren gemäß einem von 1 bis 3, wobei die Reaktion in einer Bildung und/oder Einlagerung von Hartphasen aus Verbindungen des Refraktärmetalls mit einem aus Kohlenstoff, Stickstoff, Bor, Silicium oder einer Mischung hiervon, insbesondere Kohlenstoff, Stickstoff oder einer Mischung hiervon, resultiert.
5 Verfahren gemäß 4, wobei die Kohlenstoff-, Stickstoff-, Bor- oder Siliziumquelle ausgewählt wird aus N2, NH3, NO₂, C1-C8 Alkane, CO, CO₂, BCl3 oder SiH4.
6 Verfahren gemäß einem von 1 bis 5, wobei das Bauteil anschließend einer Wärmebehandlung unterzogen wird.
7 Verwendung mindestens eines reaktiven Gases bei der Herstellung eines Bauteils aus einem Werkstoffpulver, das mindestens ein Refraktärmetall umfasst, zur Erhöhung der Grenztemperatur der Kriechfestigkeit (bleibende Längenänderung ≤ 1% nach 100 Std.) bei einer vorgegebenen Belastung von 25 N/mm², um mindestens 100°C, vorzugsweise um mindestens 200°C, mehr bevorzugt um mindestens 250°C, noch mehr bevorzugt um mindestens 275°C und am meisten bevorzugt um mindestens 300°C.
8 Verwendung gemäß 7, wobei das reaktive Gas eine Kohlenstoffquelle, Stickstoffquelle, Borquelle, Siliziumquelle oder Mischungen hiervon ist und insbesondere eine Kohlenstoffquelle, Stickstoffquelle oder Mischungen hiervon ist.
9 Bauteil hergestellt nach einem der Verfahren gemäß einem von 1 bis 6 oder der Verwendung eines reaktiven Gases gemäß einem von 7 bis 8.
10 Bauteil nach 9, wobei das Bauteil aus einem Werkstoff besteht, der mindestens zwei Refraktärmetalle umfasst vorzugsweise Titan und Tantal.
11 Ein Bauteil, wobei das Bauteil aus einem Werkstoff besteht, der mindestens ein Refraktärmetall und mindestens eine Hartphase umfasst.
12 Bauteil gemäß 11, wobei das Refraktärmetall ausgewählt wird aus der Gruppe bestehend aus Titan, Zirkonium, Hafnium, Niob oder Tantal, vorzugsweise Hafnium, Tantal oder Titan.
13 Bauteil gemäß 12, wobei der Werkstoff mindestens zwei Refaktärmetall umfasst, vorzugsweise Titan und Tantal.
14 Bauteil gemäß einem von 11 oder 13, wobei die Hartphase Carbide, Nitride, Silizide, Boride oder Mischungen hiervon, insbesondere Carbide, Nitride oder Carbonitride, des Refraktärmetalls umfassen.
15 Bauteil gemäß einem von 11 bis 14, wobei die mittlere Konzentration der Hartphasen mindestens 106 Hartphasen pro cm3, vorzugsweise mindestens 107 Hartphasen pro cm3, mehr bevorzugt mindestens 108 Hartphasen pro cm3 und insbesondere 109 Hartphasen pro cm3 beträgt.

## Patentansprüche

1. Verfahren zur Herstellung eines Bauteils, wobei das Bauteil schichtweise durch das Aufschmelzen eines Werkstoffpulvers in einer Atmosphäre enthaltend mindestens ein reaktives Gas aufgebaut wird, der Werkstoff mindestens ein Refraktärmetall umfasst und sich die Zusammensetzung des Werkstoffes während des Aufbaus des Bauteils infolge einer Reaktion mit mindestens einem in der Atmosphäre enthaltenen reaktiven Gas verändert, wobei das Refraktärmetall aus der Gruppe bestehend aus Tantal und Hafnium ausgewählt wird.

2. Verfahren gemäß Anspruch 1, wobei das Bauteil in aufeinander aufbauenden und miteinander verbundenen Schichten erzeugt wird.

3. Verfahren gemäß einem der vorangegangenen Ansprüche, wobei das Bauteil aus dem Werkstoffpulver gefertigt wird.

4. Verfahren gemäß einem der vorangegangenen Ansprüche, wobei das Bauteil einstückig hergestellt wird.

5. Verfahren gemäß einem der vorangegangenen Ansprüche, wobei ein weiteres Refraktärmetall aus der Gruppe bestehend aus Rhenium, Titan, Zirkonium, Hafnium, Vanadium, Niob, Tantal und Wolfram, vorzugsweise aus der Gruppe bestehend aus Zirkonium, Hafnium, Niob und Tantal, ausgewählt wird und insbesondere Tantal ist.

6. Verfahren gemäß einem der vorangegangenen Ansprüche, wobei die Reaktion in einer Bildung und/oder Einlagerung von Hartphasen aus Verbindungen des Refraktärmetalls mit einem aus Kohlenstoff, Stickstoff, Bor, Silicium oder einer Mischung hiervon, insbesondere Kohlenstoff, Stickstoff oder einer Mischung hiervon, resultiert.

7. Verfahren gemäß Anspruch 6, wobei die Kohlenstoff-, Stickstoff-, Bor- oder Siliziumquelle ausgewählt wird aus N₂, NH₃, NO₂, C₁-C₈ Alkane, CO, CO₂, BCl₃ oder SiH₄.

8. Verfahren gemäß einem der vorangegangenen Ansprüche, wobei das Bauteil anschließend einer Wärmebehandlung unterzogen wird.

9. Verfahren gemäß einem der vorangegangenen Ansprüche, wobei das Werkstoffpulver Wolfram enthält.

10. Verfahren gemäß einem der vorangegangenen Ansprüche, wobei das Werkstoffpulver Rhenium enthält.

11. Verfahren gemäß einem der Ansprüche 1 bis 10, wobei als Werkstoff die Legierung Ta-10W eingesetzt wird, die aus Ta und 10 Gew.% W besteht.

12. Bauteil hergestellt nach einem der Verfahren gemäß einem der Ansprüche 1 bis 11.

13. Bauteil nach Anspruch 12, wobei das Bauteil aus einem Werkstoff besteht, der mindestens zwei Refraktärmetalle umfasst vorzugsweise Titan und Tantal.

14. Bauteil nach einem der Ansprüche 12 und 13, wobei das Bauteil eine anisotrope Verteilung der Hartphasen aufweist.

15. Bauteil gemäß einem der Ansprüche 12 bis 14, wobei die mittlere Konzentration der Hartphasen mindestens 10⁶ Hartphasen pro cm³, vorzugsweise mindestens 10⁷ Hartphasen pro cm³, mehr bevorzugt mindestens 10⁸ Hartphasen pro cm³ und insbesondere 10⁹ Hartphasen pro cm³ beträgt.
